(19) Europäisches Patentamt
European Patent Office
Office européen des brevets

(11) EP 2 744 022 B1

## (12) EUROPEAN PATENT SPECIFICATION

(45) Date of publication and mention of the grant of the patent:
**24.08.2016 Bulletin 2016/34**

(51) Int Cl.:
*H01M 4/505* (2010.01)   *H01M 4/525* (2010.01)
*H01M 10/052* (2010.01)   *C01G 53/00* (2006.01)
*H01M 4/02* (2006.01)

(21) Application number: **13196784.6**

(22) Date of filing: **12.12.2013**

(54) **Positive active material for rechargeable Lithium Battery**

Positives aktives Material für wiederaufladbare Lithiumbatterie

Matériau actif positif pour batterie au lithium rechargeable

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2012 JP 2012271536**
**26.09.2013 KR 20130114614**
**02.12.2013 JP 2013249671**

(43) Date of publication of application:
**18.06.2014 Bulletin 2014/25**

(73) Proprietor: **Samsung SDI Co., Ltd.**
**Yongin-si, Gyeonggi-do (KR)**

(72) Inventors:
• **Nakano, Masatsugu**
**Minoh-shi,**
**OSAKA (JP)**
• **Takei, Yuki**
**Minoh-shi,**
**OSAKA (JP)**

(74) Representative: **Gulde & Partner**
**Patent- und Rechtsanwaltskanzlei mbB**
**Wallstraße 58/59**
**10179 Berlin (DE)**

(56) References cited:
**EP-A1- 2 128 096       EP-A1- 2 648 250**
**KR-A- 20110 113 241    US-A1- 2005 019 659**

## Description

The disclosed technology relates to a positive active material for a rechargeable lithium battery, a positive electrode including the same and a rechargeable lithium battery including the positive electrode.

## Description of the Related Technology

Lithium manganese oxide-based solid solution material has been actively researched as a positive active material for a rechargeable lithium battery..A battery containing lithium manganese oxide-based solid solution material provides high-capacity when charged at a high voltage.

However, a battery containing a common lithium manganese oxide-based solid solution material has limitations in cycle-life characteristics when repeatedly charged and discharged at a high voltage.

KR 2011 0113241 A discloses a method for manufacturing a cathode active material for a secondary battery including a metal composite oxide. Here, the firing temperature in the range of 850°C to 1000 °C and agitation at a speed of 200 to 1000rpm for 5 to 20 hours are disclosed.

EP 2 128 096 A1 discloses lithium transition metal oxide having layered structure. Here, the firing temperature of 975°C is disclosed.

## Summary of Invention

According to the present invention there is provided a positive active material for a rechargeable lithium battery as defined in claim 1. Use of the positive active material in a positive electrode of a rechargeable lithium battery improves the cycle-life characteristics of the battery. Another aspect of the disclosed technology relates to a positive electrode for a rechargeable lithium battery including the positive active material.

Yet another aspect of the disclosed technology relates to a rechargeable lithium battery including the positive electrode; a negative electrode; and an electrolyte solution.

Other embodiments are included in the following detailed description or could be learned from the dependent claims.

Use of the inventive positive active material in a rechargeable lithium battery avoids crack generation of the lithium manganese oxide-based solid solution and, as a consequence, deterioration of discharge capacity during the repeated charge and discharge cycles. Hence, the cycle-life characteristics of the battery are improved.

## Brief Description of the Drawings

FIG. 1 is a cross-sectional view showing the schematic structure of a rechargeable lithium battery.

FIG. 2 is a graph showing a relationship between a specific surface area of a lithium manganese oxide-based solid solution and a voltage drop.

FIG. 3 is a graph showing a relationship between a crystallite diameter of lithium manganese oxide-based solid solution and a voltage drop.

## Detailed Description of the Invention

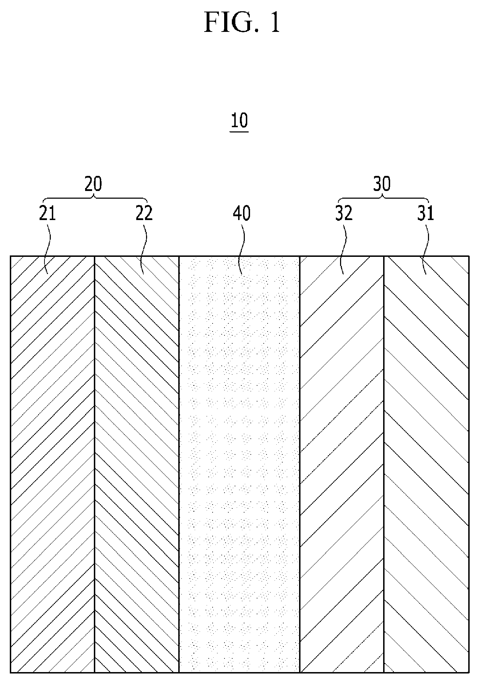

Hereinafter, one example of a rechargeable lithium battery is described referring to FIG. 1.

FIG. 1 is a cross-sectional view showing the schematic structure of a rechargeable lithium battery.

Referring to FIG. 1, a rechargeable lithium battery 10 includes a positive electrode 20, a negative electrode 30, and a separator layer 40 interposed between the positive electrode 20 and the negative electrode 30.

The rechargeable lithium battery may have a charge cut-off voltage (oxidation reduction potential) of, for example, 4.5V to 5.0V (vs. Li/Li$^+$).

The rechargeable lithium battery has no particular limit about its shape and may have a shape such as a cylinder, a prism, a laminated type, a coin-type, and the like.

The positive electrode 20 includes a current collector 21 and a positive active material layer 22 formed on the current collector 21.

The current collector may be, for example aluminum, and the like.

The positive active material layer includes a positive active material and a conductive material, and additionally a binder.

The positive active material is a lithium manganese oxide-based solid solution.

The lithium manganese oxide-based solid solution may include $Li_2MnO_3$, and more specifically may be represented by the following Chemical Formula 1.

[Chemical Formula 1]     $xLi_2MnO_3 \cdot (1-x)LiMO_2$

In the above Chemical Formula 1,
M is represented by the following Chemical Formula 2, and $0.2 \leq x \leq 0.5$.

[Chemical Formula 2]     $Mn_aCo_bNi_cM'_d$

In the above Chemical Formula 2,

M' is a transition metal except for Mn, Co, and Ni, and may be Sc, Ti, V, Cr, Fe, Cu, Zn, Y, Zr, Nb, Mo, Tc, Ru, Rh, Pd, Ag, Cd, La, Hf, Ta, W, Re, Os, Ir, Pt, Au, Hg, Ac, Rf, Db, Sg, Bh, Hs, or a combination thereof,

$0.2 \leq a \leq 0.5$, $0.1 \leq b \leq 0.4$, $0.2 \leq c \leq 0.5$, $0 \leq d \leq 0.5$ and $a+b+c+d=1$.

Preferably, M' may be Sc, Ti, V, Cr, Fe, Cu, Zn, Y, Zr, Nb, Mo, Tc, Ru, Hf, Ta, W, Re, or a combination thereof.

The rechargeable lithium battery using the lithium manganese oxide-based solid solution as a positive active material shows greater than or equal to 200 mAh/g of high-capacity when charged at a high voltage of greater than or equal to 4.5V. The lithium manganese oxide-based solid solution causes a phase change during charge and discharge, that is to say, from a layered crystal structure to a spinel-type crystal structure during charge and from a spinel-type crystal structure to a layered crystal structure during discharge in terms of the crystal structure, and this phase change may contribute to increase of discharge capacity.

The phase change may not reversibly occur during charge and discharge at a high voltage as the charge and discharge cycle is repeated. In other words, a part of crystallites does not come back to the layered crystal structure from the spinel-type crystal structure during the discharge, and thus, the crystallite having the spinel-type crystal structure increases, as a charge and discharge cycle is repeated. Accordingly, the number of the crystallite contributing to the charge and discharge decreases and deteriorates cycle-life characteristics. In addition, as the number of the crystallite having the spinel-type crystal structure increases, the internal stress of the solid solution also increases, and this stress may cause a crack on the surface of the solid solution.

The specific surface area and crystallite diameter of the lithium manganese oxide-based solid solution are thus adjusted to avoid crack generation and to maintain high-capacity characteristics despite the repeated charge and discharge cycles when charged at a high voltage, that is, to bring excellent battery cycle-life.

Specifically, the lithium manganese oxide-based solid solution has a specific surface area of 6 $m^2$/g to 12 $m^2$/g. When the lithium manganese oxide-based solid solution has a specific surface area within the range, each crystallite in the solid solution has excellent fluidity and is difficult to break and thus, may reversibly cause a phase change during the charge and discharge. Accordingly, when charged and discharged at a high voltage, the lithium manganese oxide-based solid solution may be suppressed from forming a crack on the surface and increase the battery cycle-life during the charge and discharge.

The specific surface area may be measured for example using a nitrogen adsorption method. In addition, the lithium manganese oxide-based solid solution has a crystallite diameter in the range of 40 nm to 70 nm. When the lithium manganese oxide-based solid solution has a crystallite diameter within the range, each crystallite in the solid solution has excellent fluidity and is difficult to break and thus, may reversibly cause a phase change during the charge and discharge. Accordingly, when charged and discharged at a high voltage, the lithium manganese oxide-based solid solution may be suppressed from forming a crack on the surface and increase the battery cycle-life. The crystallite indicates a single crystal having a fine size, and thus, the lithium manganese oxide-based solid solution may be multi-crystal formed of these crystallites.

Specifically, the crystallite diameter may be defined by the following Equation 1.

[Equation 1]

$$D = (K * \lambda) / (\beta * \cos\theta)$$

In the Equation 1,

D is a crystallite diameter,

K is a Scherrer constant, for example, 0.9,

$\beta$ is a full width at half maximum (rad) of a peak around a diffraction angle by an X-ray diffraction (XRD) and the peak is a diffraction peak at (003) plane of a crystallite, and

$\theta$ is a diffraction angle (rad).

Units of the $\beta$ and $\theta$ are radian.

The specific surface area and the crystallite diameter can be controlled by adjusting an agitation speed, an agitation time, a firing temperature, a firing time, and the like during the manufacture of the lithium manganese oxide-based solid solution.

The lithium manganese oxide-based solid solution may be prepared in a co-precipitation method and the like without a particular limit.

Specifically, a nickel source, a manganese source and a cobalt source are dissolved in ion exchanged water to prepare a mixed aqueous solution. The nickel source may be nickel sulfate hexa(6)hydrate, nickel acetate tetrahydrate, nickel chloride hexahydrate, nickel nitrate hexahydrate, or a combination thereof, the manganese source may be manganese sulfate hepta(7)hydrate, manganese acetate tetrahydrate, manganese chloride tetrahydrate or a combination thereof, and the cobalt source may be cobalt sulfate penta(5)hydrate, cobalt acetate tetrahydrate, or cobalt nitrate tetrahydrate or a combination thereof.

The nickel source, the manganese source, and the cobalt source may be used in an amount of 10 wt% to 25 wt% based on the total amount of the mixed aqueous solution. In addition, the nickel source, the manganese source, and the cobalt source are mixed at an appropriate ratio for obtaining a desired mole ratio of Ni, Co, and Mn. The mole ratio of the elements is determined according to composition of a lithium manganese oxide-based solid solution. For example, $0.4Li_2MnO_3$-$0.6Li$ $(Mn_{1/3}Co_{1/3}Ni_{1/3})O_2$ is prepared by using Mn:Co:Ni in a mole ratio of 60:20:20.

During the preparation of the mixed aqueous solution, a M' source may be further added. The M' source may be M-including sulfate. The exemplary of the M' source may be titanium sulfate, vanadium sulfate·n hydrdate, iron sulfate heptahydrate, or a combination thereof.

On the other hand, the ion exchanged water in a predetermined amount is put in a reaction vessel and maintained at 25°C to 60°C to prepare a reaction vessel-aqueous solution.

Subsequently, a NaOH aqueous solution (including 40 wt% of NaOH based on the total weight of the NaOH aqueous solution) is added to the ion exchange water in a dropwise fashion to adjust the pH of the reaction vessel-aqueous solution into 11.3 to 12.3. Then, the ion exchanged water was bubbled with inert gas such as nitrogen and the like to remove oxygen dissolved therein.

The reaction vessel-aqueous solution was agitated and maintained at 25°C to 60°C, and the mixed aqueous solution was added thereto in a dropwise fashion. The addition has no particular limit in a speed but may be, for example, 1 ml/min to 10 ml/min.

A NaOH aqueous solution (including 40 wt% of NaOH based on the total weight of the NaOH aqueous solution) and a $NH_3$ aqueous solution (10 wt% of $NH_3$ based on the total weight of the $NH_3$ aqueous solution) are additionally added to the resulting reaction vessel-aqueous solution, and the mixture is agitated and maintained at pH of 11.3 to 12.3 to coprecipitate hydroxide of each metal element.

Herein, the agitation may be performed at a predetermined rate and time. For example, the agitation rate may be in the range of 1 m/s to 10 m/s, and the agitation time may be in the range of about 5 hours. When the agitation rate and time are within the range, a specific surface area and a crystallite diameter within the range according to one embodiment may be obtained.

Subsequently, the separation of solid and liquid is performed. For example, the co-precipitated hydroxide is taken from the resulting reaction vessel-aqueous solution by using suction filtration and washed with ion exchanged water.

Subsequently, the co-precipitated hydroxide is vacuum-dried. The drying may be performed for example at 80°C to 150°C, for example, for 5 hours to 12 hours. After the drying, the co-precipitated hydroxide is ground for several minutes with a mortar to obtain dried powder. The dried powder is mixed with lithium carbonate to obtain mixed powder. Herein, a mole ratio between Li and M(Ni+Mn+Co) is determined by the composition of a solid solution. For example, $0.4Li_2MnO_3$-$0.6Li(Mn_{1/3}Co_{1/3}Ni_{1/3})O_2$ is prepared by mixing in 1.4:1 of a mole ratio between Li and M.

Subsequently, the mixed powder is fired for a predetermined time at a predetermined temperature. Accordingly, the lithium manganese oxide-based solid solution may be prepared. Herein, the firing is performed for 4 hours to 24 hours at a temperature ranging from 710 °C to 980 °C and specifically, 720 °C to 930 °C.

The amount of the lithium manganese oxide-based solid solution is not particularly limited, and may be applied in an amount to form a positive active material layer for a rechargeable lithium battery.

The conductive material may include, for example, carbon black such as ketjen black, acetylene black, and the like, natural graphite, artificial graphite, and the like but has no particular limit, as far as any material increases conductivity of a positive electrode.

The amount of the conductive material is not particularly limited, and may be used in an amount used in a positive active material layer of a rechargeable lithium battery.

The binder may include, for example, polyvinylidene fluoride, an ethylene-propylene-diene terpolymer, a styrene-butadiene rubber, an acrylonitrile-butadiene rubber, a fluoro rubber, polyvinyl acetate, polymethylmethacrylate, polyethylene, nitrocellulose, and the like, but has no particular limit as far as any material binds the positive active material and the conductive material on the current collector.

The amount of the binder is not particularly limited, but may be in an applicable amount to a positive active material layer of a rechargeable lithium battery.

The positive active material layer may be formed by, for example, dispersing the positive active material, the conductive material, and the binder in an organic solvent such as N-methyl-2-pyrrolidone, and the like to form slurry, and coating the slurry on the current collector followed by drying the same.

The coating method has no particular limit but may include, for example, a knife coating, a gravure coating, and the like.

Subsequently, the positive active material layer is compressed using a presser to manufacture a positive electrode having a desired thickness. Herein, the thickness of the positive active material layer is not particularly limited.

The negative electrode 30 includes a current collector 31 and a negative active material layer 32 formed on the current collector 31.

The current collector 31 may be, for example copper, nickel, and the like.

The negative active material layer may be any usable negative active material layer of a rechargeable lithium battery. For example, the negative active material layer may include a negative active material, and additionally a binder.

The negative active material may include, for example, artificial graphite, natural graphite, a mixture of artificial graphite and natural graphite, natural graphite coated with artificial graphite, and the like; a mixture of a particulate of silicon, tin or oxides thereof and the graphite; a silicon or tin particulate; a silicon- or tin-containing alloy; a titanium oxide-compound such as $Li_4Ti_5O_{12}$, and the like. The silicon oxide may be represented by $SiO_x$ ($0<x\leq2$). In addition, metal lithium, and the like may also be used.

The binder may be the same as the binder of the positive active material layer.

The mixing weight ratio of the negative active material and the binder is not particularly limited.

The negative electrode may be manufactured according to the same method as the positive electrode.

Specifically, the negative active material and the binder are mixed at a predetermined ratio and dispersed in an organic solvent such as N-methyl-2-pyrrolidone, and the like to form slurry. Then, the slurry is coated on a current collector and dried to form a negative active material layer. Subsequently, the negative active material layer is compressed using a presser to manufacture a negative electrode having a desired thickness. Herein, the thickness of the negative active material layer is not particularly limited.

When the negative active material layer is metal lithium, the current collector may be a metal lithium foil.

The separator 40 is not particularly limited, and may be any separator that is usable for a rechargeable lithium battery. Specifically, a porous film or a non-woven fabric having excellent high-rate discharge performance may be used singularly or as a mixture.

The material of the separator may include, for example, a polyolefin-based resin such as polyethylene, polypropylene and the like; a polyester-based resin such as polyethylene terephthalate, polybutylene terephthalate, and the like; a fluorinated resin such as polyvinylidene fluoride, a vinylidene fluoride-hexafluoropropylene copolymer, a vinylidene fluoride-perfluorovinylether copolymer, a vinylidene fluoride-tetrafluoroethylene copolymer, a vinylidene fluoride-trifluoroethylene copolymer, a vinylidene fluoride-fluoroethylene copolymer, a vinylidene fluoride-ethylene copolymer, a vinylidene fluoride-propylene copolymer, a vinylidene fluoride-trifluoropropylene copolymer, a vinylidene fluoride-tetrafluoroethylene-hexafluoropropylene copolymer, a vinylidene fluoride-ethylene-tetrafluoroethylene copolymer, and the like.

The porosity of the separator is not particularly limited.

The separator may be impregnated with an electrolyte.

The electrolyte may not be particularly limited and may be anything usable for a rechargeable lithium battery. Specifically, the electrolyte includes an electrolytic salt dissolved in a non-aqueous solvent.

The non-aqueous solvent may be, for example, cyclic carbonates such as propylene carbonate, ethylene carbonate, butylene carbonate, chloroethylene carbonate, vinylene carbonate, and the like; cyclic esters such as $\gamma$-butyrolactone, $\gamma$-valero lactone, and the like; linear carbonates such as dimethyl carbonate, diethyl carbonate, ethylmethyl carbonate, and the like; linear esters such as methyl formate, methyl acetate, methyl butyrate, and the like; tetrahydrofuran or a derivative thereof; ethers such as 1,3-dioxane, 1,4-dioxane, 1,2-dimethoxyethane, 1,4-dibutoxyethane, methyl diglyme, and the like; nitriles such as acetonitrile, benzonitrile and the like; dioxolane or a derivative thereof; ethylene sulfide, sulfolane, sultone or a derivative thereof, and the like. These may be used singularly or in a mixture of two or more.

The electrolytic salt may be, for example, an inorganic ionic salt such as $LiClO_4$, $LiBF_4$, $LiAsF_6$, $LiPF_6$, LiSCN, LiBr, LiI, $Li_2SO_4$, $Li_2B_{10}Cl_{10}$, $NaClO_4$, NaI, NaSCN, NaBr, $KClO_4$, KSCN, and the like; an organic ionic salt such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phthalate, lithium stearyl sulfonate, lithium octyl sulfonate, lithium dodecyl benzene sulfonate, and the like, and these may be used singularly or in a mixture of two or more.

The concentration of the electrolytic salt is not particularly limited, but may be specifically 0.5 mol/l to 2.0 mol/l.

The rechargeable lithium battery may be manufactured as follows.

The separator 40 is disposed between the positive electrode 20 and the negative electrode 30 to manufacture an electrode assembly. Subsequently, the electrode assembly is processed to have a desired shape, for example, a cylinder, a prism, a laminated type, a coin type, and the like and then, inserted into the container. Then, the above electrolyte is injected into the container, so that each pore of the separator may be impregnated with the electrolyte solution.

Hereinafter, the embodiments are illustrated in more detail with reference to examples.

Examples 1 to 5 and Comparative Examples 1 and 2

(Preparation of Lithium Manganese Oxide-based Solid Solution)

The mixed aqueous solution was prepared by dissolving nickel sulfate hexahydrate, manganese sulfate heptahydrate, and cobalt sulfate pentahydrate in ion exchanged water. Herein, the total amount of the nickel sulfate hexahydrate, the manganese sulfate heptahydrate, and the cobalt sulfate pentahydrate was included in an amount of 20 wt% based on total amount of the mixed aqueous solution. In addition, the nickel sulfate hexahydrate, manganese sulfate heptahydrate, and cobalt sulfate pentahydrate were mixed so that an element mole ratio of Mn:Co:Ni might be 60:20:20.

On the other hand, 500ml of ion exchanged water was put in a reaction vessel and maintained at 50°C. A NaOH aqueous solution (including 40 wt% of NaOH based on the total weight of the NaOH aqueous solution) was added to the ion exchanged water in a dropwise fashion to adjust pH of the aqueous solution in the reaction vessel to be 11.5, to prepare a reaction vessel-aqueous solution. Subsequently, the ion exchanged water was bubbled with nitrogen gas to remove oxygen dissolved therein.

The reaction vessel-aqueous solution was agitated and maintained at 50°C, and the mixed aqueous solution was added thereto at a rate of 3ml/min.

In addition, the NaOH aqueous solution (including 40 wt% of NaOH based on the total weight of the NaOH aqueous solution) and a $NH_3$ aqueous solution (including 10 wt% of $NH_3$ based on the total weight of the $NH_3$ aqueous solution) were additionally added thereto and agitated to maintain a pH of the resulting reaction vessel-aqueous solution at 11.5, to prepare a reaction layer aqueous solution. Herein, the agitation was performed at a rate of 5 m/s for 10 hours. According to the process, hydroxide of each metal element was co-precipitated.

Subsequently, the co-precipitated hydroxides were taken from the reaction layer aqueous solution by suction filtration and washed with ion exchanged water. Then, the co-precipitated hydroxide was vacuum-dried. The vacuum-drying was performed at 100°C for 10 hours.

Subsequently, the dried co-precipitation hydroxide was ground with a mortar and dried, obtaining a dried powder. The dried powder was mixed with lithium carbonate, obtaining mixed powder. Herein, Li and M (Ni+Mn+Co) were mixed in a mole ratio of 1.4:1.

Subsequently, the mixed powder was divided into 7 samples, and each sample was fired. Herein, firing of all the samples were performed for 6 hours by changing the firing temperature in a range of 700 to 1000°C. In other words, each sample was respectively fired at a different temperature as shown in the following Table 1, preparing lithium manganese oxide-based solid solutions according to Examples 1 to 5 and Comparative Examples 1 and 2.

Table 1

|  | Example | | | | | Comparative Example | |
|---|---|---|---|---|---|---|---|
|  | 1 | 2 | 3 | 4 | 5 | 1 | 2 |
| Firing temperature (°C) | 725 | 750 | 800 | 850 | 900 | 700 | 1000 |

(Manufacture of Rechargeable Lithium Battery Cell)

Each lithium manganese oxide-based solid solution was mixed with acetylene black and polyvinylidene fluoride in a weight ratio of 80:13:7. This mixture was dispersed into N-methyl-2-pyrrolidone to prepare a slurry. The slurry was coated and dried on an aluminum foil as a current collector to form a positive active material layer, and the positive active material layer was compressed to be 50μm thick to manufacture the positive electrode.

The negative electrode was manufactured by mounting a metal lithium foil on a copper foil as a current collector.

As for a separator, a 12 μm-thick porous polyethylene film was used and disposed between the positive and negative electrodes, manufacturing an electrode assembly.

Subsequently, the electrode assembly was manufactured into a size of a CR2032 coin half-cell and inserted in a CR2032 coin half-cell container.

An electrolyte solution was prepared by mixing ethylene carbonate and dimethyl carbonate in a volume ratio of 3:7 to prepare a non-aqueous solvent and dissolving lithium hexafluorophosphate in a concentration of 1.00 mol/l.

The electrolyte solution was injected into the coin half-cell container and thus, impregnated into the separator to make the rechargeable lithium battery cell.

Evaluation 1: Measurement of Specific Surface Area and Crystallite Diameter of Lithium Manganese Oxide-based Solid Solution

The specific surface areas of the lithium manganese oxide-based solid solutions according to Examples 1 to 5 and Comparative Examples 1 and 2 were measured using a nitrogen adsorption method, and the results are provided in the following Table 2.

In addition, the crystallite diameter of the lithium manganese oxide-based solid solutions according to Examples 1 to 5 and Comparative Examples 1 and 2 were measured, and the results are provided in the following Table 2. (Examples 4 and 5 are not falling under the present invention.)

When an X-ray diffraction test was performed on the lithium manganese oxide-based solid solutions, a peak around a diffraction angle of 18° was observed. The crystallite diameter was obtained by using a diffraction angle and a full width at half maximum of the peak and also, the following equation 1.

[Equation 1]

$$D = (K * \lambda) / (\beta * \cos\theta)$$

In the Equation 1 above, D is a crystallite diameter, K is 0.9, $\beta$ is a full width at half maximum (rad) of a peak around a diffraction angle by an X-ray diffraction (XRD) and the peak is a diffraction peak at a (003) plane of a crystallite, and $\theta$ is $18/360*2\pi$ (rad).

Table 2

|  | Crystallite diameter (nm) | Specific surface area ($m^2/g$) |
|---|---|---|
| Example 1 | 40 | 12 |
| Example 2 | 50 | 8 |
| Example 3 | 70 | 6 |
| Example 4 | 90 | 5 |
| Example 5 | 120 | 3 |
| Comparative Example 1 | 30 | 15 |
| Comparative Example 2 | 150 | 2 |

Evaluation 2: Charge and Discharge Characteristics of Rechargeable Lithium Battery Cell

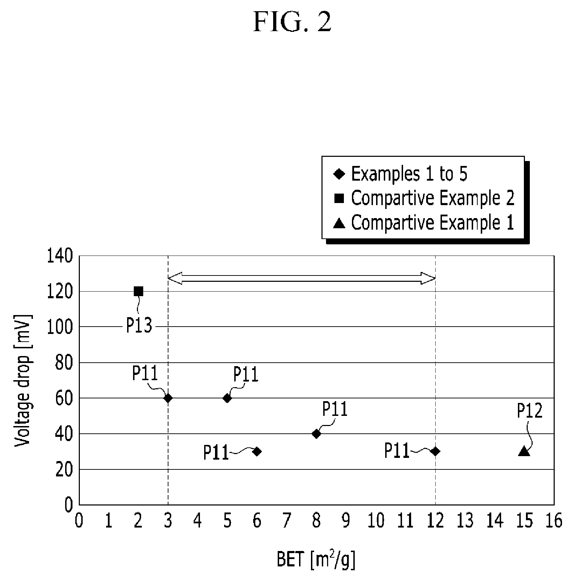

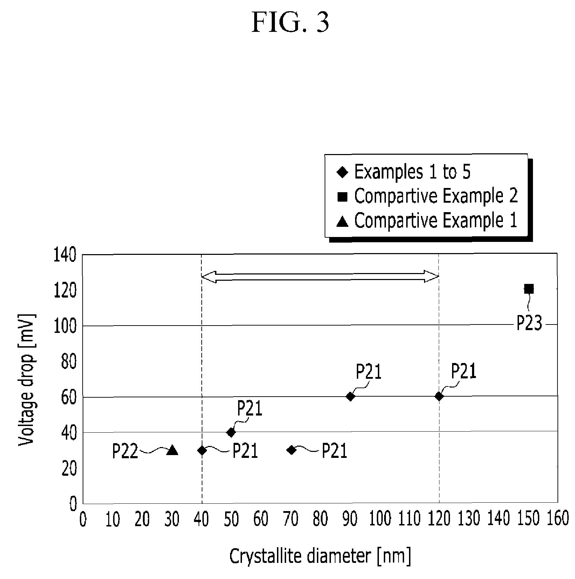

The charge and discharge evaluation of the rechargeable lithium battery cells according to Examples 1 to 5 and Comparative Examples 1 and 2 was performed as in the following Table 3, and the results are provided in the following Table 4 and FIGS. 2 and 3.

Table 3

| Cycle number | Charge rate | Discharge rate | Cut-off voltage (V) |
|---|---|---|---|
| 1 | 0.1C CC-CV | 0.1C CC | 4.8-2.0 |
| 2 | 0.2C CC-CV | 0.2C CC | 4.7-2.5 |
| 3-49 | 1C CC-CV | 1C CC | 4.7-2.5 |
| 50 | 0.2C CC-CV | 0.2C CC | 4.7-2.5 |

In Table 3, the CC-CV indicates a constant current and constant voltage charge, and the CC indicates a constant current discharge. The cut-off voltage indicates a voltage when the charge and discharge end. For example, the charge was performed up to a voltage of 4.8V of the rechargeable lithium battery cells, and the discharge was performed up to a voltage of 2.0V of the rechargeable lithium battery cells in the 1st cycle.

In the following Table 4, the capacity retention (%) was obtained as a percentage of discharge capacity at the 50th cycle relative to discharge capacity at the 2nd cycle. In addition, the average discharge voltage (V) was obtained by measuring a voltage during the discharge at a plurality of times and calculating an arithmetic mean. In addition, a voltage drop was a difference between average discharge voltage at the 2nd cycle and average discharge voltage at the 50 cycle. The smaller the difference was, the smaller change a discharge curved line had.

Table 4

| | Capacity retention (%) | Average discharge voltage (V) | | Voltage drop (mV) |
|---|---|---|---|---|
| | | 2nd cycle | 50th cycle | |
| Example 1 | 95 | 3.60 | 3.57 | 30 |
| Example 2 | 95 | 3.60 | 3.56 | 40 |
| Example 3 | 95 | 3.60 | 3.57 | 30 |
| Example 4 | 95 | 3.62 | 3.56 | 60 |
| Example 5 | 95 | 3.62 | 3.56 | 60 |
| Comparative Example 1 | 80 | 3.55 | 3.52 | 30 |
| Comparative Example 2 | 92 | 3.65 | 3.53 | 120 |

FIG. 2 is a graph showing the relationship between a specific surface area of a lithium manganese oxide-based solid solution and a voltage drop.

In FIG. 2, five points, P11, indicate measurement values of Examples 1 to 5, points P12 and P13 respectively indicate measurement values of Comparative Examples 1 and 2.

FIG. 3 is a graph showing the relationship between a crystallite diameter of lithium manganese oxide-based solid solution and a voltage drop.

In FIG. 3, five points, P21, indicate measurement values of Examples 1 to 5, and points, P22 and P23 respectively indicate measurement values of Comparative Examples 1 and 2.

Referring to Table 4 and FIGs. 2 and 3, Examples 1 to 5 showed a suppressed change in a discharge curved line and simultaneously, excellent battery cycle-life characteristics. On the other hand, the Comparative Example 1 showed a suppressed change in a discharge curved line but deteriorated battery cycle-life characteristics. In addition, Comparative Example 2 showed a large change in a discharge curved line.

In addition, when the lithium manganese oxide-based solid solutions after the charge and discharge evaluation were examined using an electron microscope, Examples 1 to 5 showed no cracks, but Comparative Examples 1 and 2 showed cracks.

Accordingly, when the lithium manganese oxide-based solid solutions had a specific surface area and a crystallite diameter within the range, generation of a crack and changes in a discharge curved line were suppressed, and simultaneously, battery cycle-life has been increased.

**Claims**

1. A positive active material for a rechargeable lithium battery comprising a lithium manganese oxide-based solid solution,
   wherein the lithium manganese oxide-based solid solution is obtained by firing a mixed powder during 4 to 24 hours at a temperature ranging from 710°C to 980°C,
   **characterized in that** the lithium manganese oxide-based solid solution has a specific surface area in the range of $6\ m^2/g$ to $12\ m^2/g$ and a crystallite diameter in the range of 40 nm to 70 nm,
   wherein the crystallite diameter is measured by a X-ray diffraction test performed on the lithium manganese oxide-based solid solution using the Scherrer equation and a full width at half maximum of a peak observed around a diffraction angle of 18°.

2. The positive active material of claim 1, wherein the lithium manganese oxide-based solid solution is represented by the following Chemical Formula 1:

   [Chemical Formula 1] $\qquad xLi_2MnO_3 \cdot (1\text{-}x)LiMO_2$

   wherein,
   M is represented by the following Chemical Formula 2, and $0.2 \le x \le 0.5$,

   [Chemical Formula 2] $\qquad Mn_aCo_bNi_cM'_d$

   wherein,

   M' is a transition metal except for Mn, Co, and Ni,
   $0.2 \le a \le 0.5$, $0.1 \le b \le 0.4$, $0.2 \le c \le 0.5$, $0 \le d \le 0.5$ and $a+b+c+d=1$.

3. A positive electrode (20) for a rechargeable lithium battery (10) comprising the positive active material according to claim 1 or 2.

4. A rechargeable lithium battery (10), comprising
   the positive electrode (20) according to claim 3;
   a negative electrode (30); and
   an electrolyte.

**Patentansprüche**

1. Positives aktives Material für eine wiederaufladbare Lithiumbatterie, aufweisend eine feste Lösung auf der Basis von Lithium-Manganoxid,
   wobei die feste Lösung auf der Basis von Lithium-Manganoxid durch Brennen eines gemischten Pulvers für 4 bis 24 Stunden bei einer Temperatur im Bereich von 710°C bis 980°C erhalten wird,
   **dadurch gekennzeichnet, dass** die feste Lösung auf der Basis von Lithium-Manganoxid eine spezifische Oberfläche im Bereich von $6\ m^2/g$ bis $12\ m^2/g$ und einen Kristallitdurchmesser im Bereich von 40 nm bis 70 nm aufweist,
   wobei der Kristallitdurchmesser durch einen Röntgenbeugungstest, der auf der festen Lösung auf der Basis von Lithium-Manganoxid mittels der Scherrer-Gleichung und einer Halbwertsbreite einer Spitze, die um einen Beugungswinkel von 18° herum beobachtet wird, durchgeführt wird, gemessen wird.

2. Positives aktives Material nach Anspruch 1, wobei die feste Lösung auf der Basis von Lithium-Manganoxid durch die folgende chemische Formel 1 dargestellt ist:

   [chemische Formel 1] $\qquad xLi_2MnO_3 \cdot (1\text{-}x)LiM02$,

   wobei
   M durch die folgende chemische Formel 2 dargestellt ist und $0{,}2 \le x \le 0{,}5$:

   [chemische Formel 2] $\qquad Mn_aCo_bNi_cM'_d$,

wobei

M' ein Übergangsmetall außer Mn, Co und Ni ist,
0,2≤a≤0,5, 0,1≤b≤0,4, 0,2≤c≤0,5, 0≤d≤0,5 und a+b+c+d=1.

**3.** Positive Elektrode (20) für eine wiederaufladbare Lithiumbatterie (10), aufweisend das positive aktive Material nach Anspruch 1 oder 2.

**4.** Wiederaufladbare Lithiumbatterie (10), aufweisend
die positive Elektrode (20) nach Anspruch 3;
eine negative Elektrode (30); und
einen Elektrolyt.

## Revendications

**1.** Matériau actif positif pour une batterie au lithium rechargeable comprenant une solution solide à base d'oxyde de manganèse-lithium,
dans lequel la solution solide à base d'oxyde de manganèse-lithium est obtenue par calcination d'une poudre mélangée pendant 4 à 24 heures à une température allant de 710°C à 980°C,
**caractérisé en ce que** la solution solide à base d'oxyde de manganèse-lithium possède une surface spécifique située dans la plage de 6 $m^2$/g à 12 $m^2$/g et un diamètre des cristallites dans la plage de 40 à 70 nm, le diamètre des cristallites étant mesuré par une analyse de diffraction aux rayons X réalisée sur la solution solide à base d'oxyde de manganèse-lithium en utilisant l'équation de Scherrer et une largeur entière à la moitié du maximum d'un pic observé autour d'un angle de diffraction de 18°.

**2.** Matériau actif positif selon la revendication 1, dans lequel la solution solide à base d'oxyde de manganèse-lithium est représentée par la formule chimique suivante 1 :

[formule chimique 1]     $xLi_2MnO_3 \cdot (1-x)LiMO_2$

dans laquelle :
M est représenté par la formule chimique 2 suivante, et $0,2 \leq x \leq 0,5$,

[formule chimique 2]     $Mn_aCo_bNi_cM'_d$

dans laquelle :

M' représente un métal de transition sauf Mn, Co et Ni,
$0,2 \leq a \leq 0,5$, $0,1 \leq b \leq 0,4$, $0,2 \leq c \leq 0,5$, $0 \leq d \leq 0,5$, et $a + b + c + d = 1$.

**3.** Electrode positive (20) pour une batterie au lithium rechargeable (10) comprenant le matériau actif positif selon la revendication 1 ou 2.

**4.** Batterie au lithium rechargeable (10), comprenant l'électrode positive (20) selon la revendication 3 ;
une électrode négative (30) ; et
un électrolyte.

FIG. 1

# FIG. 2

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110113241 A

- EP 2128096 A1